# EUROPEAN PATENT APPLICATION

(11) **EP 2 966 872 A1**
(43) Date of publication of application: **13.01.2016**
(21) Application number: 15176062.6
(22) Date of filing: 09.07.2015
(51) Int. Cl.: H04N 21/422, H04N 21/4363, H04N 21/41, G08C 17/02, H04N 5/44

(54) **DIGITAL BROADCASTING RECEPTION SYSTEM AND METHOD FOR CONTROLLING A SECOND DEVICE WITH A SET TOP BOX REMOTE CONTROL UNIT**

(30) Priority: 09.07.2014 KR 20140086284
(71) Applicant: Humax Co., Ltd., Yongin-si 449-934 (KR)
(72) Inventor: PARK, Sung Heum, 446-579 Yongin-si (KR)
(74) Representative: Zardi, Marco

(57) **Abstract**

Disclosed herein are a digital broadcasting reception system and method for lean-back control. The broadcasting reception system includes an RCU configured to input a command for entering into second device control mode, a broadcasting receiver configured to enter second device control mode when a signal of a specific key is received from the RCU, connect with a second device, and send a predetermined command value of the signal received from the RCU to the second device so that the second device is controlled in accordance with a common RCU manipulation manner, a TV terminal configured to output videos and audio signals output by the broadcasting receiver, and the second device configured to operate in response to control of the broadcasting receiver according to the common RCU manipulation manner after being connected to the broadcasting receiver.

## Description

### BACKGROUND OF THE INVENTION

### Field of the Invention

Exemplary embodiments of the present invention relate to a digital broadcasting reception system and method for performing lean-back control, and more particularly, to a digital broadcasting reception system and method for performing lean-back control, wherein when a user designates a second screen device using a Remote Control Unit (RCU) while watching a TV terminal through a digital broadcasting receiver (e.g., a set-top box), the digital broadcasting receiver and the second screen device are paired, and when input is received through the RCU, information about a program being watched is output to the second screen device or the broadcast program of another channel is output to the second screen device in the state in which the watching screen of the TV terminal is not hindered.

### Description of the Related Art

In general, a digital broadcasting receiver refers to a set-top box independently fabricated, connected to TV, and configured to receive digital broadcasting or a digital broadcasting reception TV integrated with TV and configured to receive digital broadcasting.

The digital broadcasting receiver is a convenient device that enables Video On Demand (VOD) or real-time digital broadcasting to be conveniently watched at home, and is expensive because it must include a communication unit, a control unit, an input unit, a storage unit, a restoration unit, an output unit, and so on.

As communication technologies are advanced, mobile communication technologies are generalized, and thus mobile devices, such as smart phones, are widely spread out. Accordingly, the mobile devices the necessities of the moderns, and are held by almost all the people.

Furthermore, as the development of the technologies of the mobile devices are advanced by rapid strides, digital broadcasting can be able to be received and played back or stored and digital data can be able to be played back using the mobile devices.

Recently, the mobile devices are commonly used as TV companion devices that are for users to search for information associated with content being watched while watching TV or to watch another piece of content.

A plurality of manufacturers or service providers provides TV companion or second screen services through the mobile devices by incorporating such a using form into the TV companion or second screen services.

However, the use of the TV terminals and the mobile devices is not greatly increased due to a fundamental difference in a method of controlling corresponding devices although better services are provided.

In order for a user to use such a second screen device in the state in which the user watches a TV terminal along with a common RCU in a living room in a lean-back state, the user has to lay down the RCU and to change into a lean-forward position for using a mobile device.

To change the watching state for such a temporary association operation is a conventional method and inconvenient for users who watch their TV terminals. Accordingly, there is a problem in that it is difficult to induce motivation for actual use.

[Prior Art Document]

[Patent Document]

(Patent Document 0001) Korean Patent Application Publication No. 10-2013-0134967 (December 10, 2013)

### SUMMARY OF THE INVENTION

An object of the present invention is to provide a digital broadcasting reception system and method for performing lean-back control, wherein when a user designates a second screen device using an RCU while watching a TV terminal through a digital broadcasting receiver (e.g., a set-top box), the digital broadcasting receiver and the second screen device are paired, and when input is received through the RCU, information about a program being watched is output to the second screen device or the broadcast program of another channel is output to the second screen device in the state in which the watching screen of the TV terminal is not hindered.

In accordance with an aspect of the present invention for achieving the object of the present invention, there is provided a broadcasting reception system for lean-back control, including a Remote Control Unit (RCU) configured to input a switch command or control command for second device control mode; a broadcasting receiver configured to enter into the second device control mode when a signal of a specific key is received from the RCU, connect with a second device, and send a predetermined command value of the signal received from the RCU to the second device so that the second device is controlled in accordance with a common RCU manipulation manner; a TV terminal configured to output videos and audio signals output by the broadcasting receiver; and the second device configured to operate in response to control of the broadcasting receiver according to the common RCU manipulation manner after being connected to the broadcasting receiver.

Furthermore, the control of the broadcasting receiver includes outputting information about a channel being watched to the second device in response to a common RCU input.

Furthermore, the control of the broadcasting receiver includes playing back a past scene of a channel being watched or performing a pause and capture operation through the second device in response to a common RCU input.

Furthermore, the control of the broadcasting receiver includes outputting information about another channel to the second device in response to a common RCU input.

Furthermore, the control of the broadcasting receiver includes outputting an image of another channel to the second device in response to a common RCU input.

Furthermore, the broadcasting receiver is connected to the second device using wireless communication, including Bluetooth or Wi-Fi, or an application.

Furthermore, the RCU manipulation manner operates according to the contents of a screen displayed on the second device.

In accordance with another aspect of the present invention for achieving the object of the present invention, there is provided a broadcasting receiver, including an RCU signal unit configured to receive an RCU signal from an RCU and a control unit configured to enter into second device control mode when an RCU signal of a specific key is received from the RCU, connect with a second device, and send a predetermined command value of the RCU signal of the specific key received from the RCU to the second device so that the second device is controlled in accordance with a common RCU manipulation manner.

The broadcasting receiver further includes a communication unit configured to connect with the second device and receive multimedia content to be transmitted to the second device over a wired communication network or a wireless communication network and a broadcasting output unit configured to send the received multimedia content to a TV terminal through wired communication or wireless communication.

Furthermore, the RCU signal unit receives an RCU signal from the RCU through wireless communication including Bluetooth or Wi-Fi.

Furthermore, the control unit outputs information about a channel being watched to the second device in accordance with a common RCU manipulation manner.

Furthermore, the control unit plays back a past scene of a channel being watched or performs a pause and capture operation through the second device in response to a common RCU input.

Furthermore, the control unit outputs information about another channel to the second device in accordance with a common RCU manipulation manner.

Furthermore, the control unit outputs an image of another channel to the second device in accordance with a common RCU manipulation manner.

Furthermore, the RCU manipulation manner operates according to the contents of a screen displayed on the second device.

In accordance with yet another aspect of the present invention for achieving the object of the present invention, there is provided a broadcasting reception method for lean-back control, including sending, by an RCU, an RCU signal according to the input of a specific key from a user to a broadcasting receiver; entering, by the broadcasting receiver, into second device control mode and connecting with a second device when the RCU signal of the specific key is received; sending, by the broadcasting receiver, a predetermined command value of a signal received from the RCU to the second device; and operating, by the second device, based on the predetermined command value received from the broadcasting receiver in accordance with a common RCU manipulation manner.

Furthermore, operating, by the second device, based on the predetermined command value includes receiving, by the second device, information about a channel being watched through the broadcasting receiver and outputting the received information in accordance with the common RCU manipulation manner.

Furthermore, operating, by the second device, based on the predetermined command value includes playing back, by the second device, a past scene of a channel being watched or performing a pause and capture operation through the broadcasting receiver in accordance with the common RCU manipulation manner.

Furthermore, operating, by the second device, based on the predetermined command value includes receiving, by the second device, information about another channel from the broadcasting receiver and outputting the received information in accordance with the common RCU manipulation manner.

Furthermore, operating, by the second device, based on the predetermined command value includes receiving, by the second device, an image of another channel from the broadcasting receiver and outputting the received image in accordance with the common RCU manipulation manner.

Furthermore, entering, by the broadcasting receiver, the second device control mode and connecting with the second device includes connecting with, by the broadcasting receiver, into the second device using wireless communication, including Bluetooth, Wi-Fi, or an application.

Furthermore, the RCU manipulation manner operates according to the contents of a screen displayed on the second device.

In accordance with further yet another aspect of the present invention for achieving the object of the present invention, there is provided a broadcasting reception method for lean-back control, including receiving, by an RCU signal unit, an RCU signal of a specific key from an RCU; entering, by a control unit, into second device control mode and connecting with a second device; and sending, by the control unit, a predetermined command value of the RCU signal of the specific key to the second device and controlling the second device in accordance with a common RCU manipulation manner.

Furthermore, receiving, by the RCU signal unit, an RCU signal of a specific key from an RCU includes receiving, by the RCU signal unit, the RCU signal from the RCU through wireless communication including Bluetooth or Wi-Fi.

Furthermore, sending, by the control unit, a predetermined command value includes sending, by the control unit, information about a channel being watched to the second device in accordance with the common RCU manipulation manner.

Furthermore, sending, by the control unit, a predetermined command value includes playing back, by the control unit, a past scene of a channel being watched or controlling a pause and capture operation so that the pause and capture operation is performed through the second device in accordance with the common RCU manipulation manner.

Furthermore, sending, by the control unit, a predetermined command value includes outputting, by the control unit, information about another channel to the second device in accordance with the common RCU manipulation manner.

Furthermore, sending, by the control unit, a predetermined command value includes outputting, by the control unit, an image of another channel to the second device in accordance with the common RCU manipulation manner.

Furthermore, the RCU manipulation manner operates according to the contents of a screen displayed on the second device.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a diagram schematically illustrating the overall configuration of a broadcasting reception system for lean-back control in accordance with an embodiment of the present invention;
FIG. 2 is a diagram schematically illustrating the function blocks of a broadcasting receiver in accordance with an embodiment of the present invention;
FIG. 3 is a diagram illustrating an example in which remote control is implemented in a second device in a USB form in accordance with an embodiment of the present invention;
FIG. 4 illustrates an overall flowchart illustrating a broadcasting reception method for lean-back control in accordance with an embodiment of the present invention;
FIG. 5 is a flowchart illustrating a broadcasting reception method for lean-back control of a broadcasting receiver in accordance with an embodiment of the present invention; and
FIG. 6 is a diagram illustrating an example in which a program identical with contents broadcasted in a TV terminal is played back in a second device in accordance with an embodiment of the present invention.

### DESCRIPTION OF SPECIFIC EMBODIMENTS

The present invention may be modified in various ways and may have multiple embodiments, and thus specific embodiments will be illustrated in the drawings and described in detail. It is however to be understood that the specific embodiments are not intended to limit the present invention and the embodiments may include all changes, equivalents, and substitutions that are included in the spirit and technical scope of the present invention.

A lean-back control system and method according to some embodiments of the present invention are described in detail with reference to the accompanying drawings. In describing the embodiments of the present invention with reference to the accompanying drawings, the same reference numbers will be used throughout the drawings to refer to the same or like parts, and redundant descriptions thereof are omitted.

In an embodiment of the present invention, the term 'lean-back control' refers to an operation of transferring a control signal from an Remote Control Unit (RCU) to a digital broadcasting receiver (e.g., a set-top box) or a TV terminal and playing back a broadcasting program or executing a specific function in response to a user's behavior of leaning back in a chair or a sofa and watching the TV terminal while manipulating the TV terminal using the RCU.

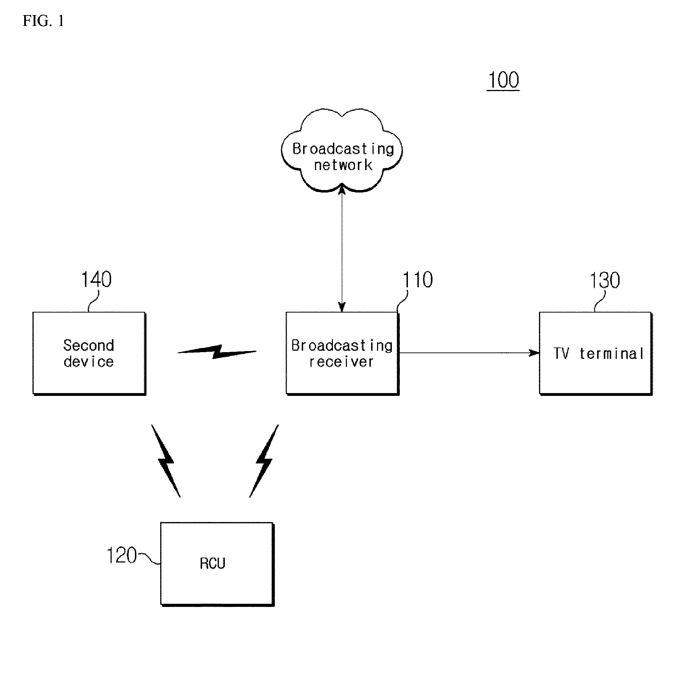

FIG. 1 is a diagram schematically illustrating the overall configuration of a broadcasting reception system for lean-back control in accordance with an embodiment of the present invention.

Referring to FIG. 1, the digital broadcasting reception system 100 for performing lean-back control in accordance with an embodiment of the present invention includes a broadcasting receiver (e.g., a set-top box) 110, an RCU 120, a TV terminal 130, and a second device 140.

The broadcasting receiver 110 is a device configured to receive various signals and output videos and audio, and may be a set-top box, for example.

That is, when a control signal of a specific key is received from the RCU 120, the broadcasting receiver 110 enters into second device control mode, connects with the second device 140, and sends the predetermined command value corresponding to the control signal received from the RCU 120 to the second device 140 so that the second device 140 is controlled using a common RCU manipulation manner.

In order for a user to use such a second device 140 in a state in which the user watches a TV terminal 130 along with a RCU in a living room in a lean-back state, the user has to lay down the RCU and to change into a lean-forward position for using the second device 140 (i.e. a mobile device). To change the watching state is inconvenient for users who watch their TV terminals 130. Thus, the present application provides controlling the second device 140 with 'a common RCU manipulation manner (or a common RCU input),' which means the second device 140 is controlled indirectly by the RCU 120. The TV terminal 130 is directly controlled by the user through the signals between the RCU 120 and the broadcasting receiver 110. The second device 140 is indirectly controlled by the user through the signals between the RCU 120 and the broadcasting receiver 110 as well as the signals between the broadcasting receiver 110 and the second device 140.

For example, when a command for entering into second device control mode is received from the RCU 120, the broadcasting receiver 110 may perform pairing with the second device 140 in second device control mode so that the content of a channel selected by the RCU 120 is transmitted to the second device 140.

In this case, the specific key may include a combination of keys of the RCU or may be set when a user designates a button.

The broadcasting receiver 110 may output information about a channel being watched to the second device 140 in response to input from a common RCU, may play back a past scene of a channel being watched through the second device 140 in response to input from a common RCU, or may perform pause and capture operations.

Furthermore, the broadcasting receiver 110 may output information about another channel to the second device 140 in response to input from a common RCU or may output an image of another channel to the second device 140 in response to input from a common RCU.

The RCU 120 may select one of various signals or input a command for entering into second device control mode. The RCU 120 is a device called a so-called remote-controller, and is configured to select a channel for receiving digital broadcasting data and to input a command for entering into second device control mode.

Furthermore, the RCU 120 may perform remote control using wireless communication including Bluetooth or Wi-Fi.

In this case, in an RCU manipulation manner using the RCU 120, unlike in a smart phone, a button is fixed, and there is no button suitable for a variety of types of menus. Accordingly, the same button may perform another function depending on the contents of a screen displayed through the broadcasting receiver 110. For example, in the case of the direction key of the RCU, if another channel list of the TV terminal 130 is displayed on the second device 140, the Up/Down key may perform a function of simply moving the channel list up or down and selecting a desired channel, and the Left/Right key may be used to search for detailed information about a channel.

Furthermore, if an image of a channel that is the same as or different from the channel of a screen image played back through the TV terminal 130 is to be displayed, the Left/Right direction key may perform functions, such as back/jump. Accordingly, the RCU manipulation manner using the RCU 120 may operate suitably for the contents of a screen displayed on the second device 140.

The broadcasting receiver 110 basically receives digital broadcasting data from the server of a broadcasting station or from a content provider over a wired/wireless communication network and sends the digital broadcasting data to the TV terminal 130. If the command for entering into second device control mode is received from the RCU 120, however, the broadcasting receiver 110 performs pairing with the second device 140 and sends information about content (e.g., a broadcasting program), output to the TV terminal 130, to the second device 140 or performs control so that the content (e.g., a broadcasting program) of a channel selected by the RCU 120 is transmitted to the second device 140.

The TV terminal 130 outputs the digital broadcasting data, received from the broadcasting receiver 110, in the form of videos and audio.

After the second device 140 is connected to the broadcasting receiver 110, it operates under the control of the broadcasting receiver 110 according to a common RCU manipulation manner. That is, after the second device 140 is paired with the broadcasting receiver 110, it receives a signal, selected by the RCU 120, from the broadcasting receiver 110 and outputs the received signal in the form of videos and audio. For example, the second device 140 may be another TV terminal, another screen device, a beam project device, an LCD device, a smart phone, a laptop computer, or a media playback device.

The second device 140 is a device capable of performing communication, receiving image media from the broadcasting receiver 110, and playing back the received image media. After the second device 140 is paired with the broadcasting receiver 110, it receives information about a broadcasting program from the broadcasting receiver 110 or receives the broadcasting program of a channel selected by the RCU 120 and outputs the received broadcasting program in the form of videos and audio.

In this case, the broadcasting receiver 110 and the second device 140 may be connected using wireless communication, including Bluetooth or Wi-Fi, or an application.

Furthermore, the broadcasting receiver 110 receives the broadcasting program of a channel selected by the RCU 120. When input of a specific key is received from the RCU 120 while the received broadcasting program is output to the TV terminal 130, the broadcasting receiver 110 enters into second device control mode and sends the predetermined command value corresponding to the input of the specific key, received from the RCU 120, to the second device 140 in second device control mode.

Furthermore, when the input of the specific key is received from the RCU 120 in second device control mode, the broadcasting receiver 110 changes the input of the specific key into input of a control key suitable for the current state of the second device 140 and sends the input of the control key.

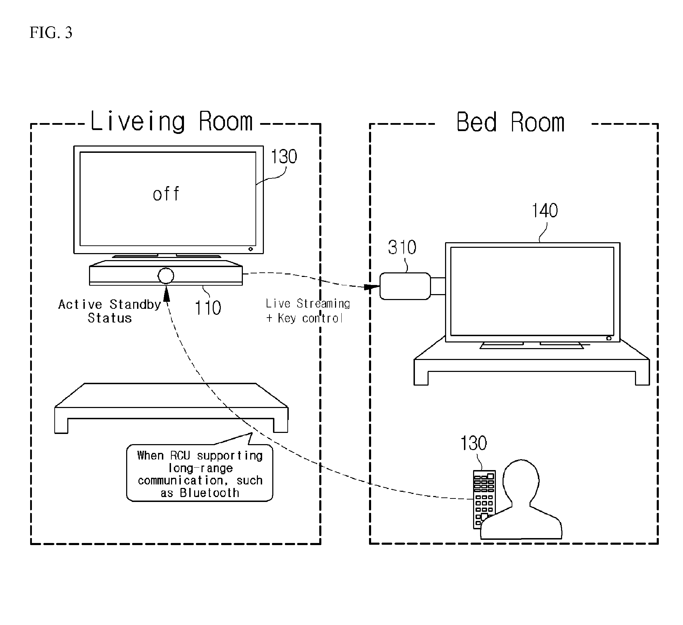

In this case, assuming that the broadcasting receiver 110 and the TV terminal 130 are placed in a living room and the second device 140 is placed in a bed room as illustrated FIG. 3, a user may control broadcasting content in the second device 140 using the RCU 120 in the bed room.

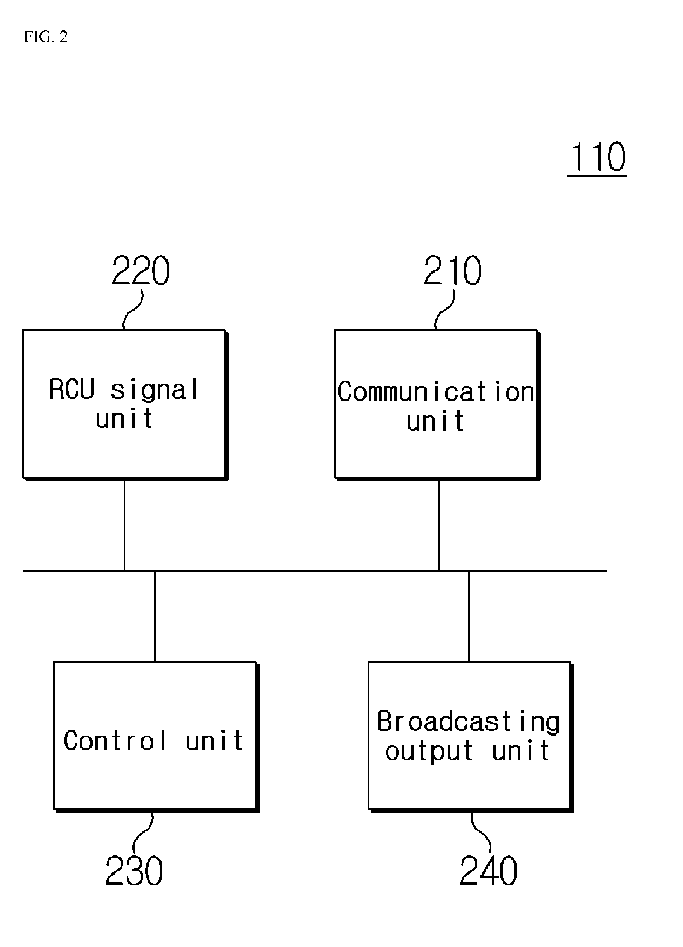

FIG. 2 is a diagram schematically illustrating the function blocks of the broadcasting receiver in accordance with an embodiment of the present invention.

Referring to FIG. 2, the broadcasting receiver 110 in accordance with an embodiment of the present invention includes a communication unit 210, an RCU signal unit 220, a control unit 230, and a broadcasting output unit 240.

The communication unit 210 receives digital broadcasting data an external wired/wireless communication network.

The RCU signal unit 220 receives an RCU signal from the RCU 120.

Furthermore, the RCU signal unit 220 receives an RCU signal from the RCU 120 through wireless communication including Bluetooth or Wi-Fi.

When an RCU signal of a specific key is received from the RCU 120, the control unit 230 enters into second device control mode, connects with the second device 140, and sends the predetermined command value corresponding to the RCU control signal, received from the RCU 120, to the second device 140 so that the operation of the second device 140 is controlled according to a common RCU manipulation manner.

That is, the control unit 230 searches for the second device 140 present in a network that is adjacent to or the same as the network of the broadcasting receiver 110 in response to the RCU signal received through the RCU signal unit 220, connects with the retrieved second device 140, and sends a control signal to the second device 140.

For example, the control unit 230 may perform control so that the digital broadcasting data of a channel selected by the RCU 120 is transmitted to the TV terminal 130 or perform pairing with a second display device when the command for entering into second device control mode is received from the RCU 120, and may send the digital broadcasting data transmitted to the TV terminal 130 to the paired second display device or perform control so that the digital broadcasting data of the channel selected by the RCU 120 is transmitted to the paired second display device.

Furthermore, when input of a specific key is received from the RCU 120 while the broadcasting program of a channel selected by the RCU 120 is output to the TV terminal 130, the control unit 230 enters into second device control mode, performs pairing with a second screen device, and sends the predetermined command value corresponding to the input of the specific key, received from the RCU 120 in second device control mode, to the paired second display device.

Furthermore, when an RCU signal is received from the RCU 120 in second device control mode, the control unit 230 changes input of a specific key into input of a control key suitable for the current state of a second display device and sends the input of the control key to the second display device.

The broadcasting output unit 240 sends received digital broadcasting data to the TV terminal 130 through wired communication or short-range communication.

As illustrated in FIG. 3, the RCU 120 may be configured in the second device 140 in the form of a USB 310. FIG. 3 is a diagram illustrating an example in which remote control is implemented in the second device in a USB form in accordance with an embodiment of the present invention. Accordingly, when the transmission side of the RCU 120 carried by a user sends an RCU signal, the reception side of the RCU 120 implemented in the second device 140 in a USB form receives the RCU signal and selects a channel for receiving digital broadcasting data or inputs a command for entering into second device control mode to a device equipped with a display device, that is, the second device 140.

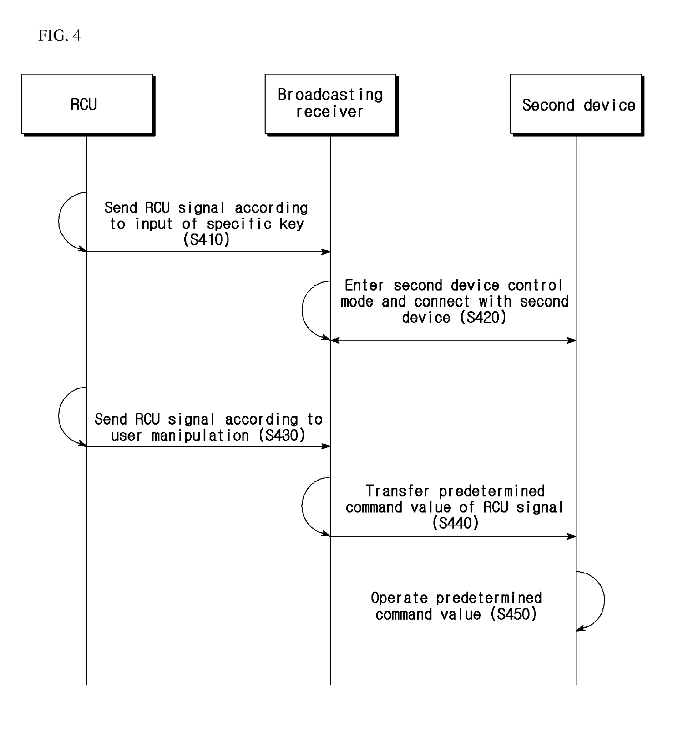

FIG. 4 illustrates an overall flowchart illustrating a broadcasting reception method for lean-back control in accordance with an embodiment of the present invention.

Referring to FIG. 4, in the digital broadcasting reception system 100 for performing lean-back control in accordance with an embodiment of the present invention, the RCU 120 sends an RCU signal, corresponding to input of a specific key, to the broadcasting receiver 110 in response to a user's manipulation at step S410.

In this case, the specific key may include a combination of keys of the RCU 120 or may be set when a user designates a button. For example, the specific key may include a combination of keys including the # button or the * button.

When the RCU signal of the specific key is received, the broadcasting receiver 110 enters into second device control mode and performs pairing with the second device 140 at step S420.

The broadcasting receiver 110 receives digital broadcasting data from a broadcasting station or a content server over a wired/wireless communication network until such a process is performed, selects one of signals according to a user's manipulation through the RCU 120, that is, selects a channel preferred by the user, and outputs the digital broadcasting data of the selected channel to the TV terminal 130 in the form of videos and audio.

In such a state, the RCU 120 sends a specific key according to a user's manipulation, that is, the command for entering into second device control mode, to the broadcasting receiver 110.

In response to the command for entering, the broadcasting receiver 110 is connected to the second device 140 by performing pairing with the second device 140.

Thereafter, the RCU 120 sends an RCU signal according to a user's manipulation to the broadcasting receiver 110 at step S430. That is, the RCU 120 sends an RCU signal for playing back broadcasting content or an RCU signal for providing information about broadcasting content to the broadcasting receiver 110.

Thereafter, the broadcasting receiver 110 transfers the predetermined command value corresponding to the RCU signal to the second device 140 at step S440. For example, an RCU signal "#50" may correspond to a command for changing a current channel to a No. 50 channel, and an RCU signal "#50*" may correspond to a command for displaying information about a No. 50 channel.

Thereafter, the second device 140 performs a corresponding operation based on the predetermined command value at step S450.

That is, the broadcasting receiver 110 sends the content (e.g., a broadcasting program) of a channel or information about a program, selected by the RCU 120, to the paired second device 140. The second device 140 displays the content of the selected channel or the information about the selected program.

Furthermore, the second device 140 may receive information about a channel being watched through the broadcasting receiver 110 in accordance with a common RCU manipulation manner and output the received information, or may play back a past scene of the channel being watched or perform a pause and capture operation.

In this case, the RCU manipulation manner using the RCU 120 may operate as a different function depending on the contents of a screen displayed through the broadcasting receiver 110. For example, in the case of the direction key of the RCU, if another channel list of the TV terminal 130 is displayed on the second device 140, the Up/Down key may perform a function of simply moving the channel list up or down and selecting a desired channel, and the Left/Right key may be used to search for detailed information about a channel.

Furthermore, if an image of a channel that is the same as or different from the channel of a screen image played back through the TV terminal 130 is to be displayed, the Left/Right direction key may perform functions, such as back/jump. Accordingly, the RCU manipulation manner using the RCU 120 may operate suitably for the contents of a screen displayed on the second device 140.

Furthermore, the second device 140 may receive information about another channel from the broadcasting receiver 110 and output the received information in accordance with a common RCU manipulation manner, or may receive an image of another channel and output the received image in accordance with a common RCU manipulation manner.

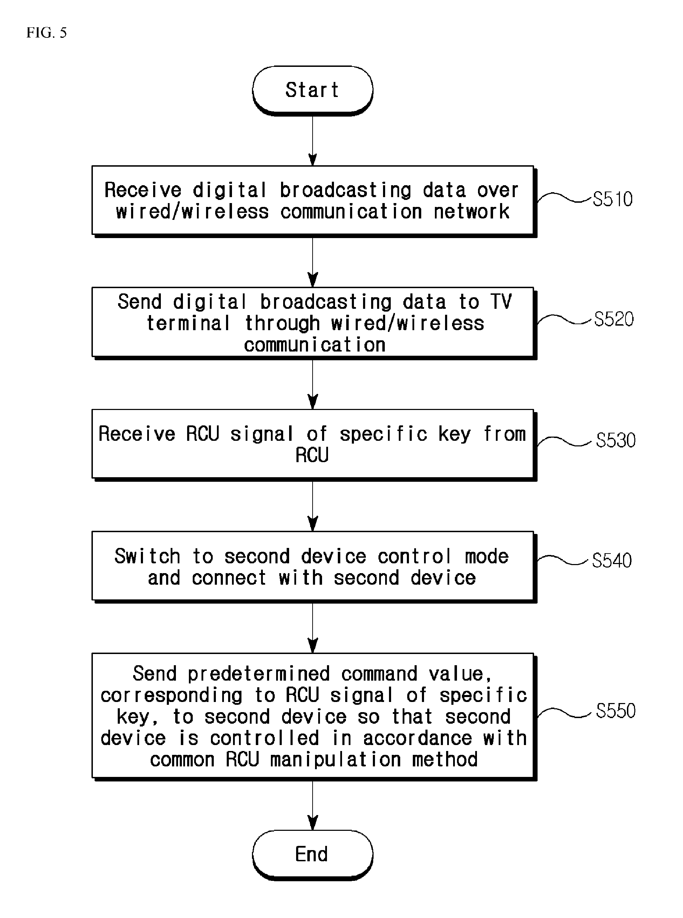

FIG. 5 is a flowchart illustrating a broadcasting reception method for lean-back control of the broadcasting receiver in accordance with an embodiment of the present invention.

Referring to FIG. 5, the communication unit 210 of the broadcasting receiver 110 in accordance with an embodiment of the present invention receives external digital broadcasting data over a wired/wireless communication network at step S510.

The broadcasting output unit 240 sends the received digital broadcasting data to the TV terminal 130 through wired communication or short-range communication at step S520.

Thereafter, the RCU signal unit 220 receives an RCU signal of a specific key from the RCU 120 at step S530. That is, the RCU signal unit 220 receives the command for entering into second device control mode from the RCU 120.

When the RCU signal of the specific key is received, the control unit 230 enters into second device control mode and connects with the second device 140 at step S540. That is, the control unit 230 searches for the second device 140 and connects with the second device 140 by performing pairing with the retrieved second device 140.

Thereafter, the control unit 230 sends a predetermined command value, corresponding to the RCU signal of the specific key, to the second device 140 so that the second device 140 is controlled in accordance with a common RCU manipulation manner at step S550.

For example, the control unit 230 may send a "command for changing a current channel to a No. 50 channel" corresponding to an RCU signal "#50" or a "command for displaying information about a No. 50 channel" corresponding o an RCU signal "#50*" to the second device 140.

Accordingly, the second device 140 displays an image of a channel being watched or information about the channel being watched on a screen in accordance with a common RCU manipulation manner.

In this case, when key input is received from the RCU 120 in second device control mode, the control unit 230 changes the key input into input of a control key suitable for the current state of the second device 140 and sends the input of the control key to the second device 140. That is, since a screen manipulated by a user through the RCU 120 is displayed on the second device 140 without change, the user can watch a broadcasting program played back through the second device 140 while checking contents manipulated by the RCU 120.

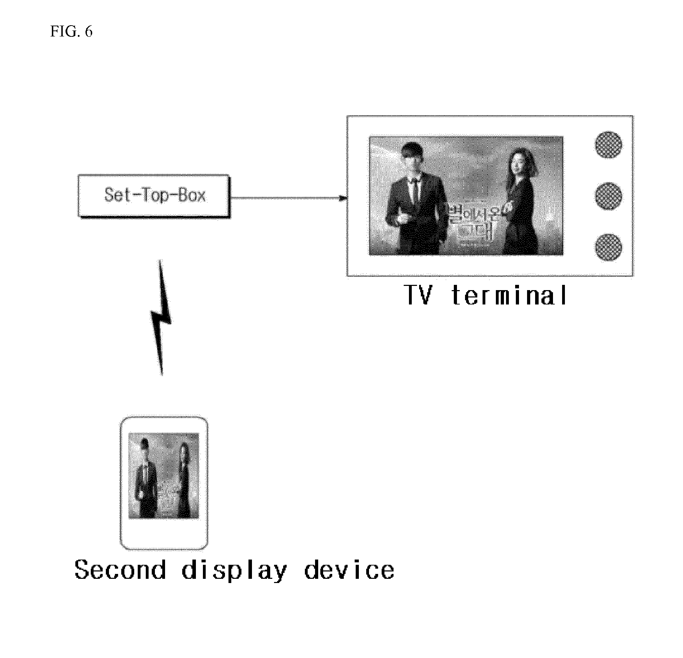

Accordingly, the second device 140, such as a smart phone carried by a user, plays back a program, broadcasted by the TV terminal 130, as the same broadcasting program of the same channel as illustrated in FIG. 6. FIG. 6 is a diagram illustrating an example in which a program identical with contents broadcasted in a TV terminal is played back in a second device in accordance with an embodiment of the present invention.

If a user uses the RCU 120 capable of short-range communication, such as Bluetooth, the user can watch lean-back TV through the second device 140, such as a mobile tablet, even in a room where the TV terminal 130 is not placed through a corresponding technology.

Furthermore, the second device 140 may receive and output an image of a channel being watched or information about the channel being watched through the broadcasting receiver 110, may play back a past scene of a channel being watched, or may perform a pause and capture operation in accordance with a common RCU manipulation manner.

Furthermore, the second device 140 may receive information about another channel from the broadcasting receiver 110 and output the received information or may receive an image of another channel from the broadcasting receiver 110 and output the received image in accordance with a common RCU manipulation manner.

As described above, the embodiments of the present invention can achieve the broadcasting reception system and method for lean-back control, wherein when a user sets a second screen device using the RCU while watching the TV terminal through the broadcasting receiver (e.g., a set-top box), the digital broadcasting receiver and the second screen device are paired and when input is received through the RCU, information about a program being watched is output to the second screen device or the broadcast program of another channel is output to the second screen device in the state in which the watching screen of the TV terminal is not hindered.

Those skilled in the art to which the present invention pertains will understand that the present invention may be implemented in various detailed forms without changing the technical spirit or indispensable characteristics of the present invention. It will be understood that the aforementioned embodiments are illustrative and not limitative from all aspects. The scope of the present invention is defined by the appended claims rather than the detailed description, and the present invention should be construed as covering all modifications or variations derived from the meaning and scope of the appended claims and their equivalents.

## Claims

1. A broadcasting reception system for lean-back control, comprising:
a Remote Control Unit (RCU) (120) configured to input a command for entering into second device control mode;
a STB (Set Top Box) (110) configured to enter into the second device control mode when the command for entering into the second device control mode is received from the RCU (120), connect with a second device (140), and send a predetermined command value corresponding to a control signal received from the RCU (120) to the second device (140) so that the second device (140) is controlled in accordance with a common RCU manipulation manner;
a TV terminal (130) configured to output videos and audio signals output by the STB (110); and
the second device (140) configured to operate in response to control of the STB (110) according to the common RCU manipulation manner after being connected to the STB (110).

2. The broadcasting reception system according to claim 1, wherein the control of the STB (110) comprises outputting information about a channel being watched to the second device (140) in response to a common RCU input under the second device control mode.

3. The broadcasting reception system according to claim 1, wherein the control of the STB (110) comprises playing back a past scene of a channel being watched or performing a pause and capture operation through the second device (140) in response to a common RCU input under the second device control mode.

4. The broadcasting reception system according to claim 1, wherein the control of the STB (110) comprises outputting information about another channel to the second device (140) in response to a common RCU input under the second device control mode.

5. The broadcasting reception system according to claim 1, wherein the control of the STB (110) comprises outputting an image of another channel to the second device (140) in response to a common RCU input under the second device control mode.

6. The broadcasting reception system according to claim 1, wherein the STB (110) is connected to the second device (140) using wireless communication comprising Bluetooth or Wi-Fi, or an application ,and
wherein the RCU (120) transmits signals to the STB (110) through wireless communication comprising Bluetooth or Wi-Fi..

7. The broadcasting reception system according to claim 1, wherein the RCU manipulation manner operates according to contents of a screen displayed on the second device (140).

8. A STB (Set Top Box) (110), comprising:
a Remote Control Unit (RCU) signal unit (220) configured to receive a command for entering into second device control mode from an RCU (120); and
a control unit (230) configured to enter into second device control mode when the command for entering into the second device control mode is received from the RCU (120), connect with a second device (140), and send a predetermined command value corresponding to a control signal received from the RCU (120) to the second device (140) so that the second device (140) is controlled in accordance with a common RCU manipulation manner.

9. The STB according to claim 8, further comprises:
a broadcasting output unit (240) configured to send multimedia content to a TV terminal (130) through wired or wireless communication; and
a communication unit (210) configured to send multimedia content to the second device (140) over wired or wireless communication.

10. The STB according to claim 8, wherein the RCU signal unit (220) receives an RCU signal from the RCU (120) through wireless communication comprising Bluetooth or Wi-Fi.

11. The STB according to claim 8, wherein the control unit (230) outputs information about a channel being watched to the second device (140) in response to a common RCU input under the second device control mode.

12. The STB according to claim 8, wherein the control unit (230) plays back a past scene of a channel being watched or performs a pause and capture operation through the second device (140) in response to a common RCU input under the second device control mode.

13. The STB according to claim 8, wherein the control unit (230) outputs information about another channel to the second device (140) in response to a common RCU input under the second device control mode.

14. The STB according to claim 8, wherein the control unit (230) outputs an image of another channel to the second device (140) in response to a common RCU input under the second device control mode.

15. The STB according to claim 8, wherein the RCU manipulation manner operates according to contents of a screen displayed on the second device (140).
